# EUROPEAN PATENT APPLICATION

(11) **EP 4 601 204 A2**
(43) Date of publication of application: **13.08.2025**
(21) Application number: 25156312.8
(22) Date of filing: 06.02.2025
(51) Int. Cl.: H04B 5/77, G06K 7/10, H04W 4/80

(54) **ELECTRONIC DEVICE AND NFC-BASED COMMUNICATION METHOD AND SYSTEM**

(30) Priority: 08.02.2024 CN 202410177214
(71) Applicant: Advanced Nova Technologies (Singapore) Holding Pte. Ltd., Singapore 189773 (SG)
(72) Inventor: WANG, Yujie, Hangzhou, 310000 (CN); DAI, Yuhua, Hangzhou, 310000 (CN); ZHENG, Weijun, Hangzhou, 310000 (CN)
(74) Representative: Winter, Brandl - Partnerschaft mbB

(57) **Abstract**

This disclosure provides an electronic device and an NFC-based communication method and system. The electronic device includes an NFC module, the NFC module includes a plurality of NFC tags with same content, and antennas of any two NFC tags do not completely overlap. This can increase a range and sensitivity of sensing the electronic device by a card reading device, to facilitate sensing and reading of the NFC tag in the electronic device by the card reading device, so as to improve a success rate and efficiency of sensing the NFC tag in the electronic device. In this way, communication efficiency and reliability of the electronic device and the NFC-based communication method and system in a case of applications to different scenarios can be improved.

## Description

### TECHNICAL FIELD

This specification relates to the field of communication technologies, and in particular, to an electronic device and an NFC-based communication method and system.

### BACKGROUND

Near field communication is an emerging technology. Devices (for example, mobile phones) that use a near field communication technology can exchange data when the devices are in close proximity to each other. For example, a card reading device can sense a tag in a tag card device, and read tag data.

Because near field communication supports a relatively short communication distance, a card reading success rate of the card reading device is relatively low and a response time is relatively long.

It should be noted that the above content of the related technology is merely information known to the inventor, and neither means that the information has entered the public domain before the application date of this disclosure, nor means that the information can become the existing technology of this disclosure.

### SUMMARY

This disclosure provides an electronic device and an NFC-based communication method and system, to avoid the above technical problem.

According to a first aspect, this disclosure provides an electronic device. The electronic device includes an NFC module, the NFC module includes a plurality of NFC tags with same content, and antennas of any two NFC tags do not completely overlap.

In some embodiments, communication protocols of different NFC tags in the plurality of NFC tags with same content are different.

In some embodiments, the antennas of the any two NFC tags have no overlapping area.

In some embodiments, respective antennas of the plurality of NFC tags with same content are arranged in parallel to form an antenna array.

In some embodiments, a quantity of the plurality of NFC tags with same content is determined based on at least one of the following:
a preset sensed range of the electronic device;
a preset sensing range of a card reading device, where the card reading device is a device that communicates with the electronic device based on NFC; and
information about detuning impact of the NFC module on the card reading device.

In some embodiments, antennas of the plurality of NFC tags with same content are located in a preset antenna area of the electronic device.

According to a second aspect, this disclosure provides an NFC-based communication method. The communication method is applied to the electronic device in any one of the above embodiments, and the communication method includes:
determining type attributes of a plurality of NFC tags with same content when obtaining a current-round card searching message initiated by a card reading device, where the type attributes are used to indicate whether the plurality of NFC tags with same content are sensed by the card reading device, and include a sensing type and a non-sensing type; and
responding to the current-round card searching message based on the sensing type, where the response is used to read tag data.

In some embodiments, communication protocols of different NFC tags in the plurality of NFC tags with same content are different;
determining the type attributes of the plurality of NFC tags with same content includes:
determining a type attribute of a current NFC tag, where the current NFC tag is any NFC tag in the plurality of NFC tags with same content; and
responding to the current-round card searching message based on the sensing type, where the response is used to read tag data includes:
when the type attribute of the current NFC tag is the sensing type, responding to the current-round card searching message based on the current NFC tag, where the response is used to read tag data in the current NFC tag.

In some embodiments, communication protocols of the plurality of NFC tags with same content are the same;
determining the type attributes of the plurality of NFC tags with same content includes:
obtaining type attributes respectively corresponding to all of the plurality of NFC tags with same content; and
responding to the current-round card searching message based on the sensing type, where the response is used to read tag data includes:
responding to the current-round card searching message based on all sensing types, where the response is used to read tag data in a target NFC tag, and the target NFC tag is determined by the card reading device from NFC tags respectively corresponding to all the sensing types.

According to a third aspect, this disclosure provides an NFC-based communication system. The communication system includes a card reading device and the electronic device in any one of the above embodiments. The card reading device is a device that communicates with the electronic device based on NFC.

The card reading device is configured to initiate a polling card searching message to the electronic device.

The electronic device responds to the card reading device by performing the communication method in any one of the above embodiments based on a current-round card searching message, where the polling card searching message includes the current-round card searching message.

The card reading device is further configured to read tag data in the electronic device based on the response.

It can be learned from the above technical solutions that this disclosure provides an electronic device and an NFC-based communication method and system. The electronic device includes an NFC module, the NFC module includes a plurality of NFC tags with same content, and antennas of any two NFC tags do not completely overlap. This can increase a range and sensitivity of sensing the electronic device by a card reading device, to facilitate sensing and reading of the NFC tag in the electronic device by the card reading device, so as to improve a success rate and efficiency of sensing the NFC tag in the electronic device. In this way, communication efficiency and reliability of the electronic device and the NFC-based communication method and system in a case of applications to different scenarios can be improved.

Other functions of the electronic device and the NFC-based communication method and system provided in this specification are partially listed in the following descriptions. Based on the descriptions, content described by using the following numbers and examples is clear to a person of ordinary skill in the art. Creative aspects of the electronic device and the NFC-based communication method and system provided in this specification can be fully explained by practice or using the methods, apparatuses, and combinations described in the following detailed examples.

### BRIEF DESCRIPTION OF DRAWINGS

To describe the technical solutions in the embodiments of this specification more clearly, the following briefly describes the accompanying drawings required for describing the embodiments. Clearly, the accompanying drawings in the following description show merely some embodiments of this specification, and a person of ordinary skill in the art can still derive other drawings from these accompanying drawings without creative efforts.
FIG. 1 is a schematic diagram of a scenario of an NFC-based communication method according to an embodiment of this disclosure;
FIG. 2 is a schematic diagram of a scenario of an NFC-based communication method according to another embodiment of this disclosure;
FIG. 3 is a schematic diagram of an electronic device according to an embodiment of this disclosure;
FIG. 4 is a schematic diagram of antenna deployment of two NFC tags with same content according to an embodiment of this disclosure;
FIG. 5 is a schematic diagram of antenna deployment of two NFC tags with same content according to another embodiment of this disclosure;
FIG. 6 is a schematic diagram of polling card searching according to an embodiment of this disclosure;
FIG. 7 is a schematic diagram of polling card searching according to another embodiment of this disclosure;
FIG. 8 is a schematic diagram of an antenna area according to an embodiment of this disclosure;
FIG. 9 is a schematic diagram of an antenna area according to another embodiment of this disclosure; and
FIG. 10 is a schematic diagram of an NFC-based communication method according to an embodiment of this disclosure.

### DESCRIPTION OF EMBODIMENTS

Example embodiments are described in detail herein, and examples of the example embodiments are presented in the accompanying drawings. When the following descriptions relate to the accompanying drawings, unless specified otherwise, same numbers in different accompanying drawings represent same or similar elements. The implementations described in the following example embodiments do not represent all implementations consistent with this disclosure. On the contrary, the implementations are merely examples of apparatuses and methods consistent with some aspects of this disclosure and described in detail in the appended claims.

It should be understood that the terms "include", "have", and any other variants thereof in the embodiments of this disclosure are intended to cover a non-exclusive inclusion. For example, products or devices including a series of components are not necessarily limited to those components that are clearly listed, but can include other components that are not clearly listed or are inherent to these products or devices.

The term "and/or" in the embodiments of this disclosure describes an association relationship between associated objects and represents that three relationships can exist. For example, A and/or B can represent the following three cases: Only A exists, both A and B exist, and only B exists. The character "/" usually indicates an "or" relationship between associated objects.

In the embodiments of this disclosure, the term "a plurality of" means two or more, and other quantifiers are similar to this.

The terms "first", "second", "third", and the like in this disclosure are used to distinguish between objects or entities that are similar to each other or of a same type, and do not necessarily imply a specific order or sequence, unless otherwise indicated. It should be understood that the terms used in this way are interchangeable in appropriate situations, for example, can be implemented in an order other than those illustrated or described in the embodiments of this disclosure.

The term "unit/module" used in this disclosure refers to any known or later developed hardware, software, firmware, artificial intelligence, fuzzy logic, or a combination of hardware and/or software code, and can perform functions related to the element.

To facilitate understanding of this disclosure by a reader, at least some terms in this disclosure are explained herein as follows:

Radio frequency identification (RFID) is a contactless automatic identification technology that uses radio frequency signals and spatial coupling transmission characteristics of the radio frequency signals to automatically identify stationary or moving objects. For example, a principle of RFID is to perform contactless data communication between a reader and a tag, to identify a target. RFID is very widely applied. Typical applications include animal chips, vehicle chip anti-theft devices, access control, parking lot control, production line automation, and material management.

Near field communication (NFC) is an emerging technology. Devices (for example, mobile phones) that use an NFC technology can exchange data when the devices are in close proximity to each other. Near field communication is evolved from an integration of RFID and interconnection technologies. By integrating functions of an inductive card reader, an inductive card, and point-to-point communication on a single chip, applications such as mobile payments, electronic ticketing, access control, mobile identity identification, and anti-counterfeiting are implemented through a mobile terminal and the like.

A mobile payment means that a mobile client makes an electronic currency payment through an electronic product such as a mobile terminal (for example, a mobile phone). The mobile payment effectively combines the Internet, terminal devices, and financial institutions, to form a new payment system. In addition, the mobile payment can not only be used to make currency payments, but also be used to pay living expenses such as phone bills, gas fees, and utility bills. The mobile payment has pioneered a new payment method, and has contributed to the widespread use of electronic currency.

A mobile terminal, or referred to as a mobile communication terminal, is a computer device that can be used in a mobile manner. In a broad sense, the mobile terminal includes a mobile phone, a notebook, a tablet computer, a point of sale (POS), and even a vehicle-mounted computer.

An electronic wallet is a commonly used payment tool in electronic commerce shopping activities. Electronic currency stored in the electronic wallet is, for example, electronic cash, electronic change, and an electronic credit card.

A wireless network communication technology (Wi-Fi), which can also be referred to as a mobile hotspot, is a wireless local area network and a wireless network transmission technology.

To facilitate understanding of this disclosure by a reader, an application scenario of this disclosure is described herein as follows:

This disclosure provides an electronic device and an NFC-based communication method and system. The electronic device is an electronic device that supports NFC, for example, a mobile terminal. Correspondingly, it can be learned, with reference to the above term descriptions of near field communication, that the electronic device and the NFC-based communication method and system in this disclosure can be applied to scenarios such as mobile payments, electronic ticketing, access control, mobile identity identification, and anti-counterfeiting. An example in which the electronic device provided in this disclosure is applied to a mobile payment scenario is used.

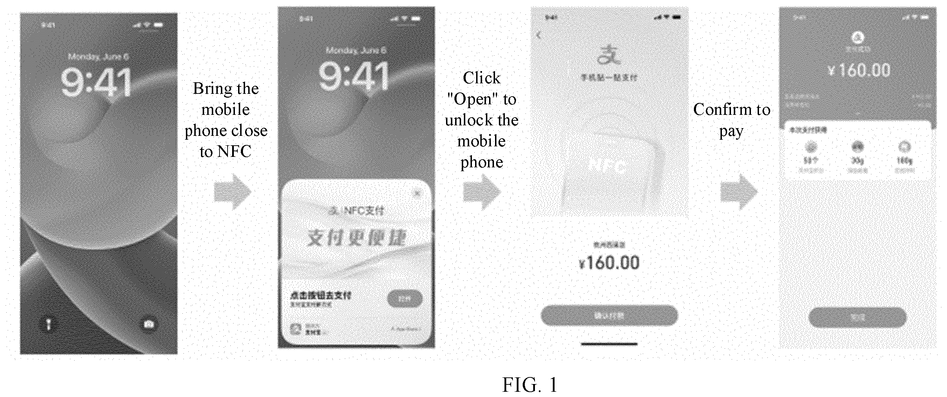

The electronic device can be an NFC payment device (which can include a merchant-presented mode collection device and a consumer-presented mode collection device). FIG. 1 is flow of using an NFC consumer-presented mode collection device with a mobile phone. As shown in FIG. 1, when the mobile phone is close to the NFC consumer-presented mode collection device, tag content in the NFC consumer-presented mode device is read, a payment page pops up, and the mobile phone obtains corresponding payment information and completes a payment.

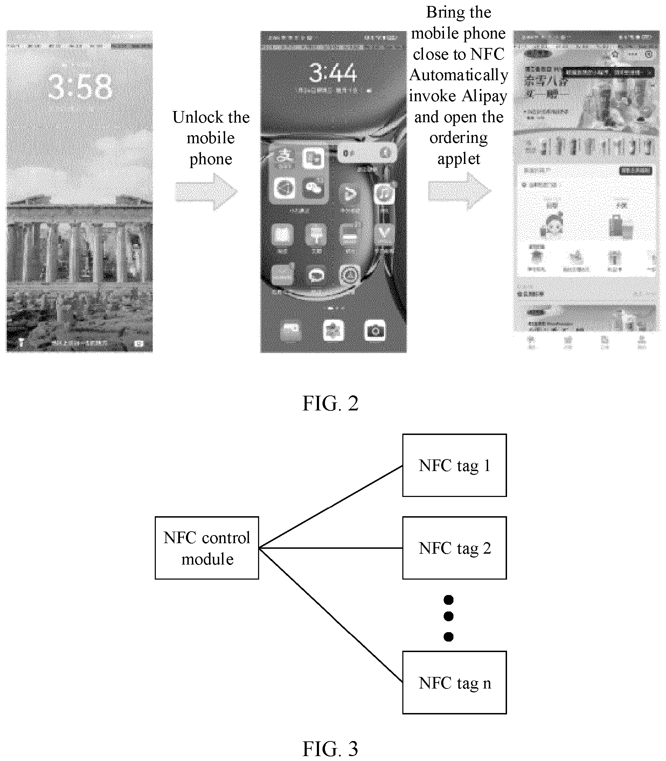

The electronic device can alternatively be an NFC code card that replaces an original two-dimensional code (for example, an ordering code). FIG. 2 is flow of bring a mobile phone close to an NFC code card to open an ordering applet. As shown in FIG. 2, the mobile phone is first unlocked, and then is brought close to the NFC code card, and the mobile phone can automatically redirect to the corresponding ordering applet.

It should be understood that the above mobile payment scenario is merely one of a plurality of use scenarios provided in this specification. The electronic device and the NFC-based communication method and system provided in this specification can not only be applied to the mobile payment scenario, but also be applied to other scenarios that support NFC, for example, electronic ticketing, access control, mobile identity identification, anti-counterfeiting, and other scenarios. A person skilled in the art should understand that applications of the electronic device in this specification to other use scenarios also fall within the protection scope of this specification.

To facilitate understanding of this disclosure by a reader, a related technology of this disclosure is described herein as follows:

An NFC technology can enable two electronic devices to communicate at a relatively short distance (for example, a few centimeters). As the NFC technology continues to mature, increasingly more mobile terminals (for example, mobile phones and POS machines) are integrated with an NFC function.

For example, the NFC technology is initially used more on smart cards, and a card reader is used to read information in the smartcard, to complete mobile payments, identity authentication, or the like. As the technology continues to mature, increasingly more devices (for example, mobile phones) are integrated with the NFC function. Usually, the mobile phone supports two modes of NFC (a card reader mode and a card emulation mode).

When the mobile phone is in the card reader mode, tag information can be read, which is commonly used for Bluetooth and Wi-Fi connection guidance. When the mobile phone is in the card emulation mode, the mobile phone emulates a card to emulate a bank card or an access card, which is used for mobile payments or access control by swiping the mobile phone.

In a related technology, a common mode of NFC in a payment scenario is that a POS machine serves as a card reader, and a mobile phone or a bank card serves as a (NFC) tag card (chip). In this disclosure, a mobile phone can serve as a card reader, and a collection device/code card can serve as a tag card.

When an NFC function of the mobile phone is enabled, a card reading function is enabled by default after the mobile phone is unlocked. After reading card information of the tag card device (for example, a POS machine), the mobile phone can pop up an NFC identification notification or directly launch a payment page, and complete a payment transaction.

Compared with a currently popular code scanning payment, a manner of identifying an NFC payment link by using a mobile phone can shorten a payment path of a user and improve payment experience of the user. However, when the mobile phone serves as a card reader to read the NFC payment link, there are also many challenges.

For example, compared with a conventional card reader, the mobile phone is powered by a battery, and is very sensitive to power consumption. Therefore, when the mobile phone is screen-off, the card reading function is disabled. Most mobile phones continuously perform normal card reading only several times after the screen is turned on and unlocked, and then switch to a low power card detection (LPCD) mode. Because of very tight internal space of the mobile phone, an NFC antenna in the mobile phone has a very small size. In this mode, a degree of coupling between the NFC antenna in the mobile phone and a card antenna greatly affects card detectability and a sensing time. For a user, when the mobile phone is brought close to the tag card device to read NFC data, a card reading success rate is relatively low and a response time is relatively long.

It should be noted that the above content of the related technology is merely information known to the inventor, and neither means that the information has entered the public domain before the application date of this disclosure, nor means that the information can become the existing technology of this disclosure.

To avoid at least one of the above problems, this disclosure proposes a creative technical concept: A plurality of same NFC tags are disposed in an electronic device, and antennas of any two NFC tags do not completely overlap, to increase a range and sensitivity of sensing the electronic device, so as to improve a success rate and efficiency of sensing the NFC tag.

Based on the above technical concept, this disclosure provides an electronic device, including an NFC module. The NFC module includes a plurality of NFC tags with same content, and antennas of any two NFC tags do not completely overlap.

FIG. 3 is a schematic diagram of an electronic device according to an embodiment of this disclosure. As shown in FIG. 3, the electronic device includes an NFC module. The NFC module can include an NFC control module and n NFC tags separately communicatively connected to the NFC control module. Herein, n is an integer greater than 1. In addition, as shown in FIG. 3, the n NFC tags include an NFC tag 1, an NFC tag 2, ..., and an NFC tag n.

The NFC control module can be connected to the n NFC tags through a communication bus, to be responsible for synchronization of NFC data in the NFC tags, anti-collision control of the n NFC tags, status synchronization, and the like.

Each NFC tag includes an antenna. For example, an antenna of the NFC tag 1 can be referred to as an antenna 1, an antenna of the NFC tag 2 can be referred to as an antenna 2, ..., and an antenna of the NFC tag n can be referred to as an antenna n. Any two of the antenna 1, the antenna 2, ..., and the antenna n do not completely overlap.

For example, if the any two antennas include the antenna 1 and the antenna 2, the antenna 1 and the antenna 2 do not completely overlap. For example, the antenna 1 and the antenna 2 may partially overlap, or the antenna 1 and the antenna 2 may not overlap.

The above payment scenario, the electronic device that is a POS machine, and a card reading device that is a mobile phone are used as an example. In this embodiment, a plurality of same NFC tags are disposed in the POS machine, and antennas of any two NFC tags do not completely overlap. This can increase a range and sensitivity of sensing the POS machine by the mobile phone, to facilitate sensing and reading of the NFC tag in the POS machine by the mobile phone, so as to improve a success rate and efficiency of sensing the NFC tag in the POS machine, and improve payment efficiency and reliability.

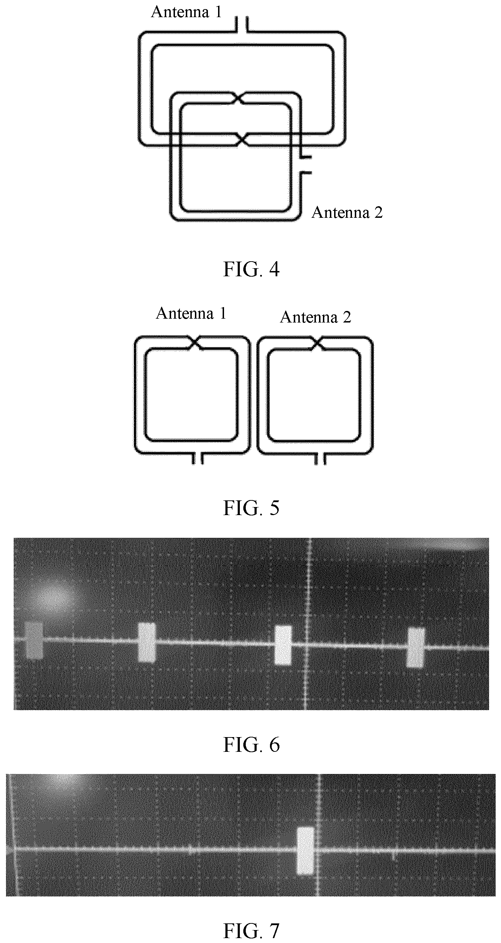

With reference to the above analysis, it can be learned that in some embodiments, the any two antennas may partially overlap. As shown in FIG. 4, if the any two antennas include the antenna 1 and the antenna 2, the antenna 1 and the antenna 2 partially overlap.

In some other embodiments, the any two antennas do not overlap.

Relatively, if the any two antennas do not overlap, an area jointly covered by all antennas can be wider. Therefore, with reference to the above example, the range and the sensitivity of sensing the POS by the mobile phone can be greatly increased, to further improve the success rate and the efficiency of sensing the NFC tag in the POS machine, and improve the payment efficiency and reliability.

In some embodiments, respective antennas of the plurality of NFC tags with same content are arranged in parallel to form an antenna array.

For example, with reference to the above example, if n is 2, that is, the plurality of NFC tags with same content are two NFC tags with same content, and antennas of the two NFC tags with same content include the antenna 1 and the antenna 2, the antenna 1 and the antenna 2 are arranged in parallel to form an antenna array, as shown in FIG. 5.

In some embodiments, communication protocols of different NFC tags in the plurality of NFC tags with same content are different.

Still with reference to the above example and FIG. 3, the NFC tag and the communication protocol are in a one-to-one correspondence. For example, one NCF tag corresponds to one communication protocol.

For example, NFC currently supports four mainstream communication protocols: 14443 Type A, 14443 Type B, FeliCa, and 15693. In this case, n can be 4, one NFC tag supports one of the four communication protocols, and the four NFC tags support different communication protocols.

Still with reference to the example of the above payment scenario, when searching for a card, the mobile phone can make a polling request in the above order of the four communication protocols. That is, when the mobile phone makes a request by using a communication protocol, only an NFC tag that supports the protocol in the POS machine responds, and another NFC tag remains silent.

As shown in FIG. 6, some mobile phones perform a plurality of rounds of card searching upon unlocking. As shown in FIG. 7, in a case of successful sensing, the mobile phone performs one round of card searching.

In this embodiment, a probability that the NFC tag responds to the card reading device is increased by using a solution of a plurality of communication protocols. In the manner in which different NFC tags use different communication protocols, a problem that different NFC tags collide in a communication process can be isolated, to improve effectiveness and reliability of communication with the electronic device.

In some embodiments, a quantity of the plurality of NFC tags with same content is determined based on at least one of the following:
Manner 1: Preset sensed range of the electronic device
Manner 2: Preset sensing range of a card reading device, where the card reading device is a device that communicates with the electronic device based on NFC
Manner 3: Information about detuning impact of the NFC module on the card reading device

It can be understood that with reference to FIG. 3, the above three manners are merely used as examples to describe a possible value manner of n, and cannot be understood as a limitation on a value manner of n and a limitation on a value of n.

Still with reference to the above example and the payment scenario example, the three manners are described herein as follows:
In the manner 1, n can be determined based on a preset sensed range of the POS machine. The preset sensed range can be determined based on a requirement, an application scenario, a historical record, an experiment, and the like. This is not limited in this embodiment.

For example, for a scenario in which the preset sensed range is a relatively large range, to meet that the NFC tag is sensed in a relatively large range, n can be a relatively large value. For a scenario in which the preset sensed range is a relatively small range, n can be a relatively small value.

In the manner 2, n can be determined based on a preset sensing range of the mobile phone. Similarly, the preset sensing range is not limited in this embodiment, for example, can be determined based on performance of the mobile phone.

Correspondingly, for a scenario in which the preset sensing range is a relatively large range, because the mobile phone has a relatively strong sensing capability, the NFC tag can be sensed in a relatively large range, and therefore n can be a relatively small value. For a scenario in which the preset sensing range is a relatively small range, because the mobile phone has a relatively weak sensing capability, to enable the mobile phone to efficiently sense the NFC tag, n can be a relatively large value.

In the manner 3, n can be determined based on information about detuning impact of the NFC module on the mobile phone. For example, n can be determined based on as great detuning impact as possible caused by the antenna of the NFC tag on an antenna of an NFC tag in the mobile phone.

In this embodiment, by determining n with reference to one or more of the above three manners, flexibility and diversity of determining n can be improved, and the success rate and the efficiency of sensing the NFC tag in the POS machine by the mobile phone can be improved while a resource waste can be avoided.

In some embodiments, antennas of the plurality of NFC tags with same content are located in a preset antenna area of the electronic device.

Relatively, the preset antenna area is an area that facilitates sensing of the NFC tag by the card reading device. Similarly, the preset antenna area can be determined based on a requirement, an application scenario, a historical record, an experiment, and the like. This is not limited in this embodiment.

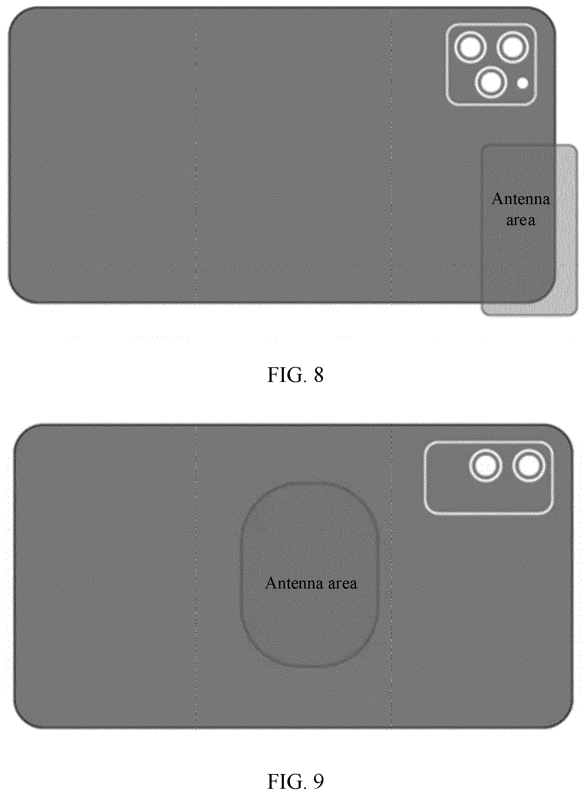

The card reading device can also have a corresponding antenna area. An example in which the card reading device is a mobile phone is used. The antenna area can be located at a position shown in FIG. 8 or FIG. 9. Certainly, the antenna area can alternatively be another area. Implementations are not listed one by one herein.

In this embodiment, the n antennas are deployed in the preset antenna area, to facilitate sensing of the NFC tag by the card reading device, so as to improve effectiveness and reliability of communication between the electronic device and the card reading device.

It should be noted that the above examples are mainly described from a perspective of the electronic device being a sensed device and the mobile phone being a card reading device, but cannot be understood as a limitation on the electronic device and the card reading device. In some communication scenarios, the electronic device is a sensed device, that is, is sensed as a card, while in some other scenarios, the electronic device can serve as a card reading device to sense and read another card.

For example, in a scenario in which two mobile phones perform payment communication, the electronic device can be a mobile phone of a payment user, or can be a mobile phone of a collection user.

With reference to the above analysis, it can be learned that in the above example, a sensing area and a communication range are mainly increased from a dimension of the quantity of NFC tags, that is, from a dimension of the quantity of antennas. In some other embodiments, the sensing area and the communication range can be increased by improving a shape and a size of the antenna or by using another method, to improve communication performance. However, relatively, there is a ceiling to antenna improvement. For example, if an antenna of a larger size is used, due to a limitation of a relatively small antenna size of the mobile phone, the communication performance is degraded for an antenna whose size exceeds a specific size.

Therefore, in some embodiments, n can be further determined with reference to dimensions such as an actual product situation of the electronic device, the shape of the antenna, and the size of the antenna, to ensure that reliability of the communication performance is improved by increasing the sensing area and the communication range.

It should be noted that a material of the antenna and a chip of the NFC tag are not limited in this embodiment, and can be determined based on a requirement, an application scenario, historical data, an experiment, and the like.

For example, the antenna can be an empty tuning coil with no modulation capability, and the chip of the NFC tag can be a chip of an NFC tag with an active load modulation capability. Relatively, a communication distance can be increased by using the chip, a sensing range can be increased by using the empty tuning coil, and a relatively good communication effect can be achieved within a communication distance range of the chip.

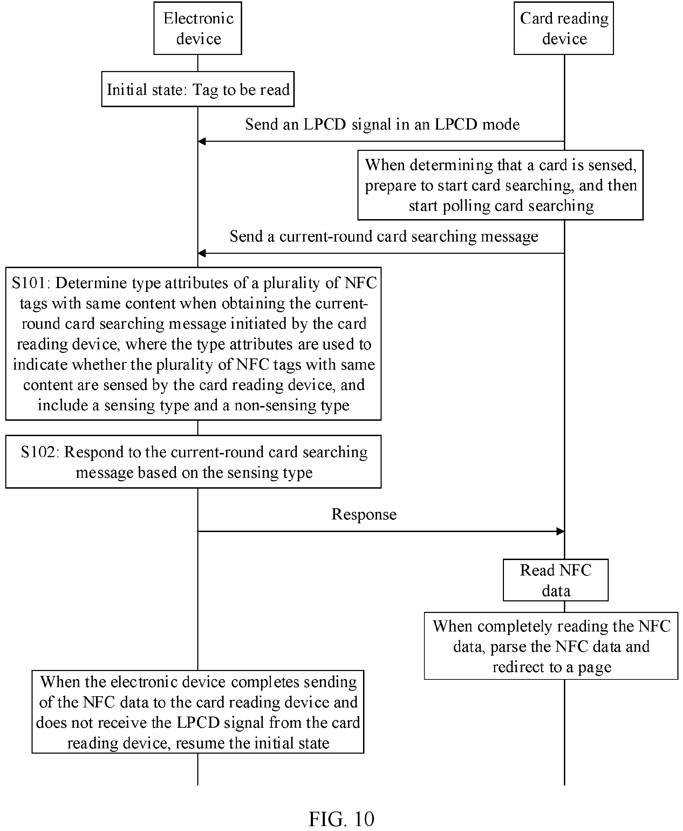

Based on the above technical concept, this disclosure further provides an NFC-based communication method. The communication method is based on the electronic device described in the above embodiment. As shown in FIG. 10, the communication method includes the following steps S101 and S102.

S101: The electronic device determines type attributes of a plurality of NFC tags with same content when obtaining a current-round card searching message initiated by a card reading device, where the type attributes are used to indicate whether the plurality of NFC tags with same content are sensed by the card reading device, and include a sensing type and a silent type.

For example, with reference to FIG. 10, it can be learned that a default state of the electronic device is an initial state, and the initial state is "tag to be read", that is, the plurality of NFC tags with same content are in a to-be-read state.

After being unlocked, the card reading device maintains an LPCD mode, and sends an LPCD signal in the LPCD mode. Correspondingly, the electronic device receives the LPCD signal.

When determining, based on the LPCD signal sent by the card reading device and a detected signal, that a card is sensed, the card reading device prepares to start card searching, and then starts polling card searching.

With reference to the above example and FIG. 6, it can be learned that polling card searching by the card reading device is a plurality of rounds of card searching. Therefore, for a current round of card searching, the card reading device initiates the current-round card searching message to the electronic device. Correspondingly, the electronic device receives the current-round card searching message.

The current-round card searching message can be initiated by the card reading device based on a communication protocol. Therefore, when the electronic device receives the current-round card searching message, an NFC tag that supports the communication protocol responds, and another NFC tag remains silent. Therefore, a type attribute of the NFC tag that supports the communication protocol can be referred to as the sensing type, and a type attribute of the another NFC tag can be referred to as a non-sensing type (or referred to as the silent type).

S102: The electronic device responds to the current-round card searching message based on the sensing type, where the response is used to read tag data.

Correspondingly, if the type attribute determined by the electronic device is the sensing type, the electronic device responds to the current-round card searching message, so that the card reading device reads the tag data based on the response.

For example, as shown in FIG. 10, when receiving the response, the card reading device starts to read NFC data, and when the NFC data is completely read, parses the NFC data and redirects to a page. When the electronic device completes sending of the NFC data to the card reading device and does not receive the LPCD signal from the card reading device, the electronic device resumes the initial state.

In some embodiments, if the card reading device does not sense a card within preset duration, next card searching is performed. For a specific implementation principle, refer to the above example. Details are not described herein.

With reference to the above analysis, it can be learned that to avoid a collision between the plurality of NFC tags with same content, at least two manners can be used for implementation. In a manner 1, communication protocols of different NFC tags in the plurality of NFC tags with same content may be different. In a manner 2, communication protocols of different NFC tags are the same. To facilitate understanding of the above collision avoidance manner by a reader, descriptions are separately provided herein.

For the manner 1 in which communication protocols of different NFC tags in the plurality of NFC tags with same content may be different:
That the electronic device determines type attributes of a plurality of NFC tags with same content in S 101 includes: determining a type attribute of a current NFC tag, where the current NFC tag is any NFC tag in the plurality of NFC tags with same content.

In addition, that the electronic device responds to the current-round card searching message based on the sensing type, where the response is used to read tag data in S102 includes: when the type attribute of the current NFC tag is the sensing type, responding to the current-round card searching message based on the current NFC tag, where the response is used to read tag data in the current NFC tag.

For example, with reference to the above example and FIG. 3, an example in which a quantity of the plurality of NFC tags with same content is 2, an NFC tag 1 and an NFC tag 2 are included, a communication protocol supported by the NFC tag 1 is 14443 Type A, and a communication protocol supported by the NFC tag 2 is 14443 Type B is used.

If a corresponding communication protocol for sending the current-round card searching message by the card reading device is 14443 Type A, the NFC tag 1 responds to the card reading device, a type attribute of the NFC tag 1 is the sensing type, the NFC tag 2 does not respond to the card reading device, and a type attribute of the NFC tag 2 is the silent type.

Correspondingly, the card reading device receives the response and knows that the response is a response made by the NFC tag 1 to the card reading device. Therefore, the card reading device starts to read NFC data in the NFC tag 1.

For the manner 2 in which communication protocols of different NFC tags are the same:

That the electronic device determines type attributes of a plurality of NFC tags with same content in S101 includes: obtaining type attributes respectively corresponding to all of the plurality of NFC tags with same content.

In addition, that the electronic device responds to the current-round card searching message based on the sensing type, where the response is used to read tag data in S102 includes: responding to the current-round card searching message based on all sensing types, where the response is used to read tag data in a target NFC tag, and the target NFC tag is determined by the card reading device from NFC tags respectively corresponding to all the sensing types.

For example, with reference to the above example and FIG. 3, an example in which a quantity of the plurality of NFC tags with same content is 2, an NFC tag 1 and an NFC tag 2 are included, and communication protocols supported by each of the NFC tag 1 and the NFC tag 2 are 14443 Type A and 14443 Type B is used.

If a communication protocol for sending the current-round card searching message by the card reading device is 14443 Type A, it is determined that type attributes of both the NFC tag 1 and the NFC tag 2 are the sensing type, and both the NFC tag 1 and the NFC tag 2 respond to the card reading device.

Correspondingly, the card reading device receives the responses respectively corresponding to the NFC tag 1 and the NFC tag 2, and selects an NFC tag from the NFC tag 1 and the NFC tag 2 for interaction. If the NFC tag 2 is selected for interaction, the NFC tag 2 is the target NFC tag, and the NFC tag 2 is active. Therefore, the card reading device starts to read NFC data in the NFC tag 2.

In some embodiments, when the card reading device completes reading of the data in the target NFC tag, an NFC tag other than the target NFC tag is turned off, to avoid a problem that the page is repeatedly launched because the card reading device reads a plurality of NFC tags.

After a radio frequency field of the card reading device is far away from the device and exceeds a communication range, each NFC tag returns to a default initial state.

It should be noted that the above example is merely used to describe a possible implementation of the NFC-based communication method in this disclosure, and cannot be understood as a limitation on an implementation of the NFC-based communication method in this disclosure. For example, based on the above technical concept, some of the above technical features can be combined to obtain a new embodiment; a new technical feature can be added based on the above example to obtain a new embodiment; some technical features can be reduced based on the above example to obtain a new embodiment; some technical features in the above example can be replaced with other technical features; or some technical features and the order in the above example can be adjusted to obtain a new embodiment. Implementations are not listed one by one herein.

According to the above technical concept, this disclosure further provides an NFC-based communication system. The communication system includes a card reading device and the electronic device in any one of the above embodiments. The card reading device is a device that communicates with the electronic device based on NFC.

The card reading device is configured to initiate a polling card searching message to the electronic device.

The electronic device is configured to respond to the card reading device by performing the communication method in any one of the above embodiments based on a current-round card searching message, where the polling card searching message includes the current-round card searching message.

The card reading device is further configured to read tag data in the electronic device based on the response.

According to the above technical concept, this disclosure further provides a processor-readable storage medium. The processor-readable storage medium stores a computer program, and the computer program is used to enable a processor to perform the NFC-based communication method in any one of the above embodiments.

According to the above technical concept, this disclosure further provides an NFC-based communication system, including:
at least one memory, where the memory includes at least one group of instructions for performing NFC-based communication; and
at least one processor communicating with the at least one memory.

When the at least one processor executes the at least one group of instructions, the NFC-based communication method in any one of the above embodiments is implemented.

According to the above technical concept, this disclosure further provides a computer program product, including a computer program. When the computer program is executed by a processor, the NFC-based communication method in any one of the above embodiments is implemented.

According to the above technical concept, this disclosure further provides an electronic device, including a processor and a memory that is communicatively connected to the processor.

The memory stores computer-executable instructions.

The processor executes the computer-executable instructions stored in the memory, to implement the NFC-based communication method in any one of the above embodiments.

According to the above technical concept, this disclosure further provides a non-transitory storage medium that stores at least one group of executable instructions for performing NFC-based communication. When the executable instructions are executed by a processor, the executable instructions instruct the processor to implement the steps of the NFC-based communication method in this specification. In some possible implementations, various aspects of this specification can be further implemented in a form of a program product, including program code.

Specific implementations of the present specification are described above. Other embodiments fall within the scope of the appended claims. In some cases, the actions or steps described in the claims can be performed in an order different from that in the embodiments and desired results can still be achieved. In addition, the process depicted in the accompanying drawings does not necessarily need a particular order or consecutive order to achieve the desired results. In some implementations, multitasking and parallel processing are possible or may be advantageous.

In conclusion, after reading the detailed disclosure, a person skilled in the art can understand that the detailed disclosure can be presented only by using an example, and can impose no limitation. Although it is not explicitly stated herein, a person skilled in the art can understand that the requirements of this specification include various proper changes, improvements, and modifications to the embodiments. These changes, improvements, and modifications are intended to be provided in this specification, and fall within the spirit and scope of the example embodiments of this specification.

In addition, some terms in this specification are used to describe the embodiments of this specification. For example, "one embodiment", "embodiments", and/or "some embodiments" mean that a structure or feature can be included in at least one embodiment of this specification in connection with the specific features described in this embodiment. Therefore, it can be emphasized and understood that two or more references to "embodiments", "one embodiment", or "alternative embodiments" in various parts of this specification do not necessarily refer to a same embodiment. In addition, specific features, structures, or characteristics can be properly combined in one or more embodiments of this specification.

It should be understood that in the above descriptions of the embodiments of this specification, to help understand a feature, for the purpose of simplifying this specification, various features are combined in a single embodiment, accompanying drawings, or descriptions thereof in this specification. However, this does not mean that the combination of these features is necessary. It is entirely possible for a person skilled in the art to label some devices and understand the devices as separate embodiments when reading this specification. That is, the embodiments of this specification can also be understood as an integration of a plurality of secondary embodiments. Content of each secondary embodiment is also true when a quantity of features is less than a quantity of all features in one of the above disclosed embodiments.

Each patent, patent application, publication of a patent application, and other materials, for example, articles, books, instructions, publications, documents, and products, that are cited in this specification and that are other than any document that is inconsistent or conflict with this document or that imposes limiting impact on the widest scope of the claims can be incorporated herein by reference and used for all purposes now or later associated with this document. In addition, the terms in this document shall prevail if there is any inconsistency or conflict between the descriptions, definitions, and/or use of the related terms in any material and the descriptions, definitions, and/or use of the related terms in this document.

Finally, it should be understood that the principles of the implementation solutions of this specification are described in the implementation solutions of the application disclosed in this specification. Other modified embodiments also fall within the scope of this specification. Therefore, the embodiments disclosed in this specification are merely examples and not limitations. A person skilled in the art can use an alternative configuration according to the embodiments of this specification to implement the application in this specification. Therefore, the embodiments of this specification are not limited to the embodiments accurately described in the application.

## Claims

1. An electronic device, wherein the electronic device comprises an NFC module, the NFC module comprises a plurality of NFC tags with same content, and antennas of any two NFC tags do not completely overlap.

2. The electronic device according to claim 1, wherein communication protocols of different NFC tags in the plurality of NFC tags with same content are different.

3. The electronic device according to claim 1, wherein the antennas of the any two NFC tags have no overlapping area.

4. The electronic device according to claim 3, wherein respective antennas of the plurality of NFC tags with same content are arranged in parallel to form an antenna array.

5. The electronic device according to claim 1, wherein a quantity of the plurality of NFC tags with same content is determined based on at least one of the following:
a preset sensed range of the electronic device;
a preset sensing range of a card reading device, wherein the card reading device is a device that communicates with the electronic device based on NFC; and
information about detuning impact of the NFC module on the card reading device.

6. The electronic device according to claim 1, wherein antennas of the plurality of NFC tags with same content are located in a preset antenna area of the electronic device.

7. An NFC-based communication method, wherein the communication method is applied to the electronic device according to any one of claims 1 to 6, and the communication method comprises:
determining type attributes of a plurality of NFC tags with same content when obtaining a current-round card searching message initiated by a card reading device, wherein the type attributes are used to indicate whether the plurality of NFC tags with same content are sensed by the card reading device, and comprise a sensing type and a non-sensing type; and
responding to the current-round card searching message based on the sensing type, wherein the response is used to read tag data.

8. The communication method according to claim 7, wherein communication protocols of different NFC tags in the plurality of NFC tags with same content are different;
determining the type attributes of the plurality of NFC tags with same content comprises:
determining a type attribute of a current NFC tag, wherein the current NFC tag is any NFC tag in the plurality of NFC tags with same content; and
responding to the current-round card searching message based on the sensing type, wherein the response is used to read tag data comprises:
when the type attribute of the current NFC tag is the sensing type, responding to the current-round card searching message based on the current NFC tag, wherein the response is used to read tag data in the current NFC tag.

9. The communication method according to claim 7, wherein communication protocols of the plurality of NFC tags with same content are the same;
determining the type attributes of the plurality of NFC tags with same content comprises:
obtaining type attributes respectively corresponding to all of the plurality of NFC tags with same content; and
responding to the current-round card searching message based on the sensing type, wherein the response is used to read tag data comprises:
responding to the current-round card searching message based on all sensing types, wherein the response is used to read tag data in a target NFC tag, and the target NFC tag is determined by the card reading device from NFC tags respectively corresponding to all the sensing types.

10. An NFC-based communication system, wherein the communication system comprises a card reading device and the electronic device according to any one of claims 1 to 6, and the card reading device is a device that communicates with the electronic device based on NFC;
the card reading device is configured to initiate a polling card searching message to the electronic device;
the electronic device is configured to respond to the card reading device by performing the communication method according to any one of claims 7 to 9 based on a current-round card searching message, wherein the polling card searching message comprises the current-round card searching message; and
the card reading device is further configured to read tag data in the electronic device based on the response.

11. A computer-readable storage medium storing instructions, wherein when the instructions are executed, a machine is enabled to perform the method according to any one of claims 7 to 9.

12. A computing device, comprising a memory and a processor, wherein the memory stores executable code, and when the processor executes the executable code, the computing device is caused to implement the method of any one of claims 7 to 9.

13. A computer program comprising computer executable instructions which when executed by a processor cause the processor to implement the method of any one of claims 7 to 9.

14. An apparatus comprising means for performing the steps of the method of any one of claims 7 to 9.
